# EUROPÄISCHE PATENTSCHRIFT

(11) **EP 1 383 845 B1**
(45) Veröffentlichungstag und Bekanntmachung des Hinweises auf die Patenterteilung: **02.05.2007**
(21) Anmeldenummer: 02727492.7
(22) Anmeldetag: 27.03.2002
(51) Int. Cl.: C09J 7/02, B42D 15/10, B44C 1/17, G09F 3/02

(54) **SICHERHEITSFOLIENSYSTEM MIT REAKTIVEN KLEBSTOFFEN**
SECURITY FILM SYSTEM WITH REACTIVE ADHESIVES
SYSTEME DE FILM DE SECURITE AVEC ADHESIFS REACTIFS

(30) Priorität: 05.04.2001 DE 10117198
(43) Veröffentlichungstag der Anmeldung: 28.01.2004
(73) Patentinhaber: OVD Kinegram AG, 6301 Zug (CH)
(72) Erfinder: KROLZIG, Olaf, CH-6330 Cham (CH)
(74) Vertreter: Zinsinger, Norbert
(86) Internationale Anmeldenummer: PCT/EP2002/003442
(87) Internationale Veröffentlichungsnummer: WO 2002/081585

(56) Entgegenhaltungen:
- WO-A-01/89831
- WO-A-92/01572
- US-A- 5 942 330
- DATABASE WPI Section Ch, Week 198121 Derwent Publications Ltd., London, GB; Class A32, AN 1981-37154D XP002205781 & JP 56 034453 A (TOPPAN PRINTING CO LTD), 6. April 1981 (1981-04-06)

## Beschreibung

Die vorliegende Erfindung betrifft ein Sicherheitsfoliensystem für Dokumente oder allgemein Datenträger mit einer Übertragungslage, Klebe- oder Haftschicht, einer Trennschicht und einer Schulz - und/oder Trägerschicht.

Derartige Sicherheitsfoliensysteme sind weit verbreitet und werden als Heißpräge- oder Schutzlaminatfolien in den verschiedensten Bereichen eingesetzt.

Unabhängig von ihrem Einsatzbereich, ob als Sicherheitselement für Banknoten, Scheck- oder Kreditkarten oder für Ausweisdokumente, besitzen die aus dem Stand der Technik bekannten Sicherheitsfoliensysteme allgemein einen weitgehend übereinstimmenden Schichtaufbau. Dabei weisen derartige Heißpräge- oder Laminatfolien allgemein eine Klebeschicht zur Festlegung auf einem Substrat, d. h. einem zu dekorierenden oder zu schützenden Objekt auf. Auf dieser Klebeschicht ist eine Übertragungslage angeordnet, die sich aus einer oder mehreren Schichten zusammensetzt und entsprechende Sicherheitselemente enthält. Hierbei können metallisierte oder nicht-metallisierte Diffraktionsstrukturen im Schichtaufbau enthalten sein, wobei die einzelnen Schichten auch voll- oder teilflächig vorgesehen und von verschiedener Farbe sein können. Häufig werden diese Schichten durch unterschiedliche Lacke gebildet, die vorzugsweise mittels Druckverfahren aufgebracht werden. Auf diese Weise sind paßgenaue Sicherheitselemente oder Dekorationsmuster herstellbar. In der Übertragungslage können weiterhin Lackschichten enthalten sein, die nachträglich, z.B. durch Bestrahlen mit einem Laser, irreversibel verändert werden können.

Derartige Sicherheitsfoliensysteme sind hinsichtlich des Aufbaus der Übertragungslage allgemein bekannt und waren in letzter Zeit Gegenstand von zahlreichen Patentanmeldungen.

Die genannten Sicherheitsfoliensysteme sind dabei gewöhnlich mit thermoplastischen Klebstoffsystemen ausgerüstet. Diese Sicherheitsfoliensysteme werden mittels Druck- und Temperatur auf das zu schützende Objekt, z.B., eine personalisierte Paßseite oder dergl. übertragen. Dabei wird beim Transfer auf das Objekt der Klebstoff mittels Temperatureinwirkung aufgeschmolzen. Der Klebstoff verankert sich dabei physikalisch im zu dekorierenden oder mit einem Sicherheitselement zu versehenden Substrat bzw. dessen Materialoberfläche und sorgt nach dem Abkühlen für die nötige Verbundhaftung. Hierbei findet keine chemische Reaktion statt. Ein besonderer Nachteil dieser Klebstoffsysteme ist es jedoch, daß sie jederzeit reversibel aufschmelzbar sind und somit die das Sicherheitselement enthaltende Übertragungslage einfach durch Erwärmen abgelöst und auf ein anderes Substrat aufgebracht werden kann. Derartige thermoplastische Verklebungen sind somit aufgrund ihrer thermoplastischen Eigenschaften eine potentielle Schwachstelle bei Sicherheitsfoliensystemen.

Eine Verbesserung hinsichtlich der Fälschungssicherheit der vorgenannten Sicherheitsfoliensysteme wurde durch den Einsatz von reaktiven, sich räumlich vernetzenden Klebstoffsystemen erzielt. Hierdurch ließen sich kompakte, nicht mehr aufschmelzbare Verbundsysteme herstellen. Dabei verändern diese Klebstoffsysteme während der Reaktion ihre chemische Struktur und werden zu einem duromeren Werkstoff. Sie lassen sich durch Temperatureinwirkung nicht mehr aufschmelzen oder verformen. Wird die Temperatur zu stark erhöht, so findet eine Zersetzung der Klebeschicht statt. In der Regel liegen die Temperaturen hierfür über 200 °C, so daß man davon ausgehen kann, daß der Verbund gegenüber mechanischen, thermischen und chemischen Angriffen wesentlich resistenter ist und Manipulations- bzw. Fälschungsversuche zumindest stärker erschwert werden als mit thermoplastischen Klebesystemen.

Die DE 40 22 584 offenbart eine Reihe von Ein- oder Mehrkomponenienreakiivklebern für eine derartige Anwendung. Im Fall des Einkomponentenreaktivklebers ist dabei offenbarungsgemäß nur auf der Heißprägefolie eine Kleberschicht vorhanden. Bei diesem Einkomponentenreaktivkleber handelt es sich gemäß DE 40 22 584 um einen maskierten, unter Wärmeeinwirkung frei werdenden Vernetzer, der bspw. ein blockiertes Polyisocyanat enthält.

Dieser aus dem Stand der Technik bekannte Einkomponentenreaktivkleber weist jedoch den Nachteil auf, daß die Vernetzungsreaktion auch unter üblicherweise vorliegenden Umgebungsbedingungen langsam voranschreitet, so daß mit einem derartigen Einkomponentenreaktivkleber versehene Heißprägefolien nur über eine beschränkte Lagerzeit verfügen.

Bei dem aus der DE 40 22 584 ebenfalls bekannten Mehrkomponentenreaktivkleber ist wenigstens eine zweite Komponente auf dem zu dekorierenden Substrat zwingend vorzusehen. Hierdurch ergeben sich erhebliche Einschränkungen hinsichtlich des Sicherheitsfoliensystems bzw. der Heißprägefolie, da diese nur auf Substrate aufgebracht werden können, die eine Schicht mit einer entsprechenden Reaktivkleberkomponente aufweisen.

Aus der WO 99/29755 ist ein Verfahren zur Herstellung und die Verwendung von lagerstabilen, latent-reaktiven Schichten oder Pulvern aus Oberflächen desaktivierten Polyisocyanaten und Dispersionspolymeren mit funktionellen Gruppen bekannt. Die latent-reaktiven Produkte in Schicht- oder Pulverform dienen offenbarungsgemäß zur Erzeugung von Klebeverbindungen und Beschichtungen wobei ein Verkleben von Folien allgemein erwähnt, jedoch nicht näher erläutert ist.

Die DE 195 12 725 C1 beschreibt eine Ausweiskarte in Form einer Chipkarte, wobei in einer Ausnehmung des Kartenkörpers ein Trägerelement mit IC-Baustein unlösbar eingesetzt wird, wobei das Trägerelement mittels eines mikroverkapselten Klebstoffs im Kartenkörper fixiert ist.

Die WO 01/89831 A1 beschreibt ein Verfahren zur Herstellung einer mehrschichtigen Dokumentenkarte, insbesondere einer Ausweiskarte aus Kunststoff, wobei die Karte einen Kartenkern mit wenigstens einer Kartenkernschicht, einer Deckschicht auf wenigstens einer Seite des Kartenkerns und Klebstoffschichten zwischen den einzelnen Kartenschichten aufweist und der Kartenkern ein- oder zweiseitig bedruckt ist, mit folgenden Verfahrensschritten: Bereitstellen der bedruckten Schichten des Kartenkerns, Bereitstellen der Deckschichten, Aufbringen der Klebstoffschichten auf die einzelnen Deck- und/oder Kernschichten, positionsgenaues Übereinanderlegen der einzelnen Kartenschichten und Verbinden der Kartenschichten in einer Laminationspresse unter dem Einfluss von Druck und Wärme, wobei in wenigstens einer Klebstoffschicht ein unter dem Einfluss von Druck und/oder Wärme vernetztes Klebstoffsystem mit einer thermoplastischen Kunststoffkomponente und einer Vernetzer-Komponente verwandt wird.

Die US 5,942,330 beschreibt eine klebrige Filmzusammensetzung umfassend ein reaktives Polyurethan-Harz und ein Isocyanat, welches eine thermisch labile Schutzgruppe umfasst, wobei das Isocyanat durch Exposition der Beschichtungsschicht der Zusammensetzung mit einer Temperatur von etwa 340° F für eine oder weniger Sekunden aktiviert werden kann.

Es ist daher Aufgabe der vorliegenden Erfindung ein Sicherheitsfoliensystem bereitzustellen, das möglichst fälschungs- und manipulationssicher ist, einfach und wirtschaftlich herstellbar, über einen verlängerten Zeitraum nach der Herstellung verwendbar ist und die aus dem Stand der Technik bekannten Nachteile möglichst weitgehend vermeidet.

Es ist weiterhin Aufgabe der vorliegenden Erfindung ein Sicherheitsfoliensystem für Dokumente zu schaffen, das möglichst wenigen Beschränkungen hinsichtlich des zu schützenden Substrats bzw. des zu schützenden Dokuments sowie dem Ort und/oder dem Zeitpunkt des Aufbringens auf das Substrat bzw. Dokument unterliegt.

Die vorliegende Aufgabe wird durch ein Sicherheitsfoliensystem für Dokumente mit den Merkmalen von Anspruch 1 gelöst.

Vorteilhafte Ausgestaltungen der Erfindung sind Gegenstand der Ansprüche 2 bis 6 sowie der Ansprüche 8 und 9.

Die vorliegende Aufgabe wird weiterhin durch ein Verfahren zur Herstellung eines Sicherheitsfoliensystems gemäß Anspruch 7 gelöst.

Das Sicherheitsfoliensystem für Dokumente ist vorteilhafterweise besonders flexibel handzuhaben, weil die nach der Herstellung der Übertragungslage, z.B. des diffraktiven Folienverbunds, erfolgenden Schritte bis zur Aufbringung der Übertragungslage auf einem Substrat oder Dokument an verschiedenen Orten und zu verschiedenen Zeiten durchgeführt werden können.

Im allgemeinen wird jedoch die Klebe- oder Haftschicht direkt im Anschluß an die Herstellung der Übertragungslage aufgebracht. Der erfindungsgemäß eingesetzte, mikroverkapselte Reaktivkleber ist kommerziell erhältlich, z.B. unter der Bezeichnung Purbond HCM® von der Firma Ebnöther AG, Sempach, Schweiz. Ein derartiger Reaktivkleber ist besonders gut handhabbar und läßt sich z.B. in einem Pulverbeschichtungsverfahren bei Temperaturen von etwa 60 bis 70 °C auf die Übertragungslage aufbringen, wobei durch die bei dieser Temperatur stattfindenden Fixierung eine lackähnliche Klebe- oder Haftschicht gebildet wird, die noch nicht aktiviert ist und überraschenderweise besonders lange aktivierbar bleibt. Die Klebe- oder Haftschicht des vorliegenden Sicherheitsfoliensystems bleibt dabei über einen Zeitraum von bis zu wenigstens einem Jahr aktivierbar.

Ein besonderer Vorteil des erfindungsgemäßen Sicherheitsfoliensystems für Dokumente ist dabei die Möglichkeit der dezentralen Dokumentenanwendung, d.h. die Aufbringung der Übertragungslage an einem anderen Ort als dem Herstellungsort derselben. Im Gegensatz zu sogenannten "Online-Prozessen", bei denen die Beschichtung, die Applikation und die Härtung des Klebstoffs, also die Herstellung des Verbunds mit dem zu schützenden Dokument, am Herstellungsort der Übertragungslage stattfindet, wird durch die vorliegende Erfindung ein weitaus flexiblerer Einsatz des Sicherheitsfoliensystems für Dokumente ermöglicht.

Üblicherweise wird das die erfindungsgemäße Klebe- oder Haftschicht aufweisende Foliensystem, d.h. die Kombination von Übertragungslage und Klebe- oder Haftschicht, auf Rollen oder in anderen gewünschten und gut handzuhabenden Formaten bereitgestellt und an den Anwendungsort verbracht. Unter Anwendungsort ist dabei vorliegend der Ort zu verstehen, an dem das Sicherheitsfoliensystem auf ein Dokument oder allgemein ein Substrat aufgebracht wird. Hierbei wird das erfindungsgemäße Sicherheitsfoliensystem auf dem Dokument oder Substrat plaziert und positioniert und bspw. durch ein Rollenlaminationsverfahren kurzzeitig auf eine Aktivierungstemperatur im Bereich von etwa 110 bis 150 °C gebracht. Hierbei findet eine thermische Aufspaltung der Mikroverkapselung und nachfolgend eine entsprechende Vernetzungsreaktion statt, bei der die in der Klebe- oder Haftschicht enthaltene wenigstens eine mikroverkapselte Reaktivkleberkomponente zu einem Duromer reagiert und eine feste, praktisch unlösbare Verbindung der Übertragungslage mit dem zu schützenden Dokument oder Substrat herstellt.

Die mikroverkapselte Reaktivkleberkomponente ist bevorzugt thermisch aktivierbar, wobei grundsätzlich aber auch die Möglichkeit besteht bspw. durch UV- oder Röntgenstrahlung aktivierbare Reaktivkleber einzusetzen, solange diese in einer Klebe- oder Haftschicht fixierbar sind und für einen ausreichend langen Zeitraum aktivierbar verbleiben. Besonders bevorzugt ist die wenigstens eine Reaktivkleberkomponente von einem mikroverkapselten Isocyanat oder von einem mikroverkapselten Phthalsäureanhydrid gebildet.

Überraschenderweise hat sich gezeigt, daß die Klebe- und Haftschicht bei dem erfindungsgemäßen Sicherheitsfoliensystem für Dokumente auf einfache Weise einer auf die Fläche bezogenen partiellen Aktivierung und einer auf die Masse der wenigstens einen Reaktivkleberkomponente bezogenen Teilaktivierung zugänglich ist. Dabei ist für eine partielle Aktivierung die Abdeckung der Klebe- und Haftschicht mittels einer thermisch isolierenden Schablone und kurzzeitige (Teil-)Erwärmung der nicht durch die Schablone abgedeckten Bereiche ausreichend. Durch die Steuerung der Temperatur und der Dauer der Erwärmung der nicht abgedeckten Bereiche läßt sich der Grad der teilweisen Vorvernetzung auf einfache Weise vorherbestimmen. Hierdurch ist es möglich das erfindungsgemäße Sicherheitsfoliensystem mit Bereichen von unterschiedlicher Haftkraft auszustatten.

Die vorgeschriebenen Bereiche unterschiedlicher Haftkraft können dabei in beliebiger Anordnung erzeugt werden, so z.B. in Form von mehr oder weniger abstrakten Mustern oder in Form von alphanumerischen Zeichen, wie z.B. Schriftzügen oder Seriennummern.

In einer besonders bevorzugten Ausführungsform der vorliegenden Erfindung, die besonders für eine dezentrale Anwendung geeignet ist, weist die Klebe- oder Haftschicht auf der nicht zur Übertragungslage weisenden Seite eine Schutzschicht auf. Hierdurch wird vermieden, daß während der Lagerung des erfindungsgemäßen Sicherheitsfoliensystems und/oder des Transports Verschmutzungen der Klebeschicht auftreten, die die Haftfähigkeit an dem zu schützenden Dokument oder Substrat beeinträchtigen können. Eine derartige Schutzschicht wird insbesondere von einer entfernbaren Folie gebildet, weil die Schutzschicht in dieser Ausgestaltung besonders leicht und problemlos entfernbar ist.

Besonders bevorzugt umfaßt die Übertragungslage des erfindungsgemäßen Sicherheitsfoliensystems eine Diffraktionsschicht oder eine Schicht die ein optisches Beugungsmuster erzeugt, da derartige, optisch wirksame Strukturen als Sicherheitselement in vielfältigen Anwendungen und Anwendungsbereichen etabliert und akzeptiert sind und besonders gut handhabbar sind.

In einer Weiterbildung der vorliegenden Erfindung weist die Übertragungslage auf der nicht zur Klebe- oder Haftschicht weisenden Seite eine Schutzschicht auf. Diese Schutzschicht kann als feste Schutzlackschicht ausgebildet sein oder auch als entfernbare Schutzschicht, die zum einen die später sichtbare Oberfläche des Sicherheitsfoliensystems vor Beschädigungen während der Herstellung, der Lagerung und dem Transport schützt. Sie kann insbesondere auch als Trägerschicht für das Sicherheitsfoliensystem ausgebildet sein.

Hierbei ist grundsätzlich anzumerken, daß dem Fachmann auf dem Gebiet der Sicherheitselemente und der Heißpräge- und Dekorationsfolien der grundsätzliche Schichtaufbau derartiger Foliensysteme und ihrer Übertragungslagen geläufig ist.

Hinsichtlich der auf der Übertragungslage angeordneten Schutz- und/oder Trägerschicht ist noch zu erwähnen, daß zwischen der Übertragungslage und der Schutz- und/oder Trägerschicht eine Trennschicht angeordnet ist, die das Ablösen dieser Schicht erleichtert. In einer besonderen Ausgestaltung ist die Trennschicht dabei gleichzeitig als eine auf der Übertragungslage verbleibende Schutzschicht ausgebildet.

Das erfindungsgemäße Sicherheitsfoliensystem läßt sich äußerst vorteilhaft in der Form von Etiketten oder Aufklebern verwenden. Dabei können die Etiketten oder Aufkleber aus einem flächigen Sicherheitsfoliensystem ausgestanzt werden bzw. ausgestanzt vorliegen.

Unter Verwendung von derartigen Etiketten oder Aufklebern ist eine vereinfachte Aufbringung auf zu sichernde Dokumente oder Substrate möglich.

## Patentansprüche

1. Sicherheitsfoliensystem für Dokumente mit einer Übertragungslage, einer Schutz- und/oder Trägerschicht, einer Trennschicht und einer Klebe- oder Haftschicht, die wenigstens eine thermisch aktivierbare oder durch UV- oder Röntgenstrahlung aktivierbare mikroverkapselte Reaktivkleberkomponente aufweist, wobei zwischen der Übertragungslage und der Schutz- und/oder Trägerschicht die Trennschicht angeordnet ist und wobei die Klebe- oder Haftschicht über einen Zeitraum von bis zu wenigstens einem Jahr aktivierbar bleibt und die wenigstens eine Reaktivkleberkomponente nach einem Aktivieren zu einem Duromer aushärtet, und wobei die Schutzschicht und/oder Trägerschicht auf der Seite der Übertragungslage angeordnet ist, die nicht zur Klebe- oder Haftschicht weist.

2. Sicherheitsfoliensystem gemäß Anspruch 1,
**dadurch gekennzeichnet,**
**daß** die wenigstens eine Reaktivkleberkomponente von einem mikroverkapselten Isocyanat oder Phthalsäureanhydrid. gebildet ist.

3. Sicherheitsfoliensystem gemäß einem der vorhergehenden Ansprüche,
**dadurch gekennzeichnet,**
**daß** die Klebe- oder Haftschicht auf der nicht zur Übertragungslage weisenden Seite eine weitere Schutzschicht aufweist.

4. Sicherheitsfoliensystem gemäß Anspruch 3,
**dadurch gekennzeichnet,**
**daß** die Schutzschicht von einer entfernbaren Folie gebildet ist.

5. Sicherheitsfoliensystem gemäß einem der vorhergehenden Ansprüche,
**dadurch gekennzeichnet;**
**daß** die Übertragungslage eine Diffraktionsschicht umfaßt oder eine Schicht, die ein optisches Beugungsmuster erzeugt.

6. Sicherheitsfoliensystem gemäß Anspruch 1,
**dadurch gekennzeichnet,**
**daß** die Trennschicht gleichzeitig als Schutzschicht für die Übertragungslage ausgebildet ist.

7. Verfahren zur Herstellung eines Sicherheitsfoliensystems gemäß einem der Ansprüche 1 bis 6,
**dadurch gekennzeichnet,**
**daß** die Klebe- oder Haftschicht in einem Pulverbeschichtungsverfahren aufgebracht wird.

8. Sicherheitsfoliensystem nach einem der Ansprüche 1 bis 6,
**dadurch gekennzeichnet,**
**daß** es als Etikett oder Aufkleber ausgebildet ist.

9. Sicherheitsfoliensystem nach Anspruch 8,
**dadurch gekennzeichnet,**
**daß** das Etikett oder der Aufkleber in ausgestanzter Form vorliegt.

## Claims

1. Security film system for documents, comprising a transfer layer, a protective and/or carrier layer, a separating layer and a gluing or adhesive layer, which has at least one micro-encapsulated reactive adhesive component that can be activated thermally or activated by UV or X-ray radiation, the separating layer being arranged between the transfer layer and the protective and/or carrier layer, the gluing or adhesive layer remaining activatable over a time period of up to at least one year, and the at least one reactive adhesive component curing after activation to form a thermoset material, and the protective layer and/or carrier layer being arranged on the side of the transfer layer that is not facing the gluing or adhesive layer.

2. Security film system according to Claim 1, **characterized in that** the at least one reactive adhesive component is formed by a micro-encapsulated isocyanate or phthalic anhydride.

3. Security film system according to one of the preceding claims, **characterized in that** the gluing or adhesive layer has a further protective layer on the side not facing the transfer layer.

4. Security film system according to Claim 3, **characterized in that** the protective layer is formed by a removable film.

5. Security film system according to one of the preceding claims, **characterized in that** the transfer layer comprises a diffraction layer or a layer which produces an optical diffraction pattern.

6. Security film system according to Claim 1, **characterized in that** the separating layer is formed at the same time as a protective layer for the transfer layer.

7. Method for producing a security film system according to one of Claims 1 to 6, **characterized in that** the gluing or adhesive layer is applied in a powder coating process.

8. Security film system according to one of Claims 1 to 6, **characterized in that** it is formed as a label or sticker.

9. Security film system according to Claim 8, **characterized in that** the label or the sticker is in a punched-out form.

## Revendications

1. Système de film de sécurité pour document ayant une couche de transfert, une couche de protection et/ou de support, une couche de séparation et une couche de colle ou d'adhésif, qui présente au moins un composant de colle réactive micro-encapsulé pouvant être activé thermiquement ou par un rayonnement UV ou un rayonnement X, dans lequel la couche de séparation est disposée entre la couche de transfert et la couche de protection et/ou de support, et dans lequel la couche de colle ou d'adhésif garde la possibilité d'être activée sur une période allant jusqu'à au moins un an, et le au moins un composant de colle réactive durcit après une activation pour donner un duromère, et dans lequel la couche de protection et/ou la couche de support est disposée sur la face de la couche de transfert qui ne donne pas sur la couche de colle ou d'adhésif.

2. Système de film de sécurité selon la revendication 1,
**caractérisé en ce que**
le au moins un composant de colle réactive est formé d'un isocyanate ou d'un anhydride d'acide phtalique micro-encapsulé.

3. Système de film de sécurité selon l'une quelconque des revendications précédentes,
**caractérisé en ce que**
la couche de colle ou d'adhésif présente une autre couche de protection sur la face ne donnant pas sur la couche de transfert.

4. Système de film de sécurité selon la revendication 3,
**caractérisé en ce que**
la couche de production est formée d'un film pouvant être éliminé.

5. Système de film de sécurité selon l'une quelconque des revendications précédentes,
**caractérisé en ce que**
la couche de transfert comprend une couche de diffraction ou une couche produisant une figure de diffraction optique.

6. Système de film de sécurité selon la revendication 1,
**caractérisé en ce que**
la couche de séparation est formée simultanément en tant que couche de protection pour la couche de transfert.

7. Procédé de fabrication d'un système de film de sécurité selon l'une quelconque des revendications 1 à 6,
**caractérisé en ce que**
la couche de colle ou d'adhésif est appliquée selon un procédé d'application en revêtement de poudre.

8. Système de film de sécurité selon l'une quelconque des revendications 1 à 6,
**caractérisé en ce que**
il est conçu en tant qu'étiquette ou autocollant.

9. Système de film de sécurité selon la revendication 8,
**caractérisé en ce que**
l'étiquette ou l'autocollant se présente sous une forme découpée.
